# EUROPEAN PATENT SPECIFICATION

(11) **EP 3 513 897 B1**
(45) Date of publication and mention of the grant of the patent: **06.01.2021**
(21) Application number: 17850813.1
(22) Date of filing: 08.09.2017
(51) Int. Cl.: B23K 9/073, B23K 9/12, B23K 9/025, B23K 9/09, B23K 9/095, B23K 9/10, B23K 9/173, B23K 9/23, B23K 101/18, B23K 101/34

(54) **ARC WELDING DEVICE AND ARC WELDING CONTROL METHOD**
LICHTBOGENSCHWEISSVORRICHTUNG UND STEUERUNGSVERFAHREN FÜR LICHTBOGENSCHWEISSEN
DISPOSITIF DE SOUDAGE À L'ARC ET PROCÉDÉ DE COMMANDE DE SOUDAGE

(30) Priority: 15.09.2016 JP 2016180145
(43) Date of publication of application: 24.07.2019
(73) Proprietor: Panasonic Intellectual Property Management Co., Ltd., Osaka-shi, Osaka 540-6207 (JP)
(72) Inventor: FUJIWARA, Junji, Osaka 540-6207 (JP); KAWAMOTO, Atsuhiro, Osaka 540-6207 (JP); FURUYAMA, Yuya, Osaka 540-6207 (JP)
(74) Representative: Vigand, Philippe
(86) International application number: PCT/JP2017/032447
(87) International publication number: WO 2018/051911

(56) References cited:
- WO-A1-2009/122657
- WO-A1-2014/073184
- WO-A1-2014/073184
- WO-A1-2014/156115

## Description

The present invention relates to an arc welding device and an arc welding control method that perform welding alternately in a short-circuit state and an arc state while repeating forward feed and reverse feed as feed of a welding wire that is a consumable electrode.

### BACKGROUND ART

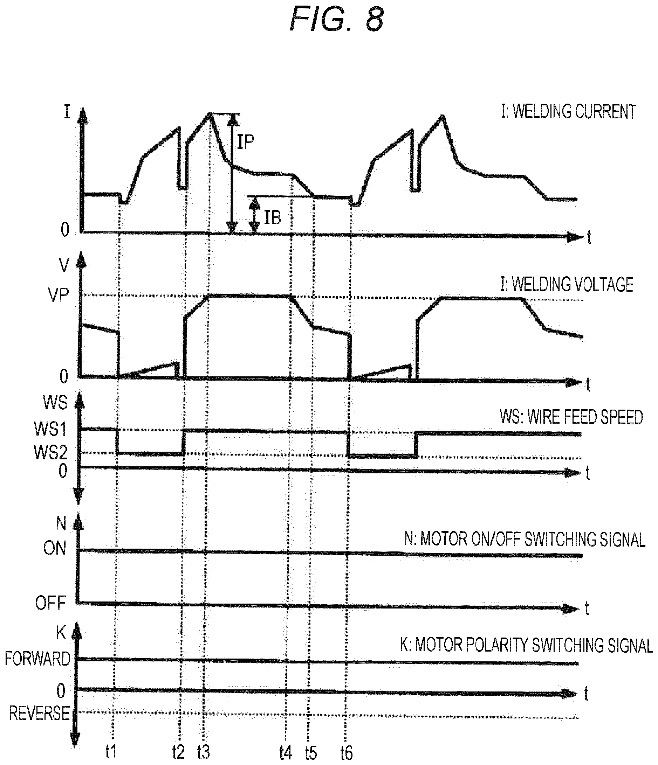

In general, in a case where a zinc-plated steel plate is welded, short circuiting transfer welding (CO₂ welding, MAG welding) or pulse MAG welding is widely used. FIG. 8 is a view for describing a conventional arc welding control method for welding a zinc-plated steel plate.

A boiling point of zinc with which a surface of a zinc-plated steel plate is plated is 907 degrees, which is lower than a melting point of iron of 1536 degrees. In a case where a zinc-plated steel plate is arc-welded, zinc vaporizes and zinc vapor thus generated is to diffuse to an outside through molten metal in molten pool. However, in a case where a rate of solidification of the molten metal is high, the zinc vapor does not fully diffuse to an outside and remain as a gas pocket in a welding bead and on a welding bead surface. The gas pocket remaining in the welding bead becomes a blowhole and the gas pocket opened on the surface of the welding bead becomes a pit. The gas pocket such as a blowhole or a pit may lower strength of welding. For this reason, in the automobile industry in which a zinc-plated steel plate is often used, it is necessary to suppress occurrence of a gas pocket. In particular, an amount of occurrence of pits is regulated in many cases.

FIG. 8 illustrates an example of waveforms of conventional short-circuit arc welding. FIG. 8 illustrates temporal changes of welding current I, welding voltage V, wire feed speed WS, motor ON/OFF switching signal N, and motor polarity switching signal K.

In FIG. 8, in a short-circuit period from time t1 to time t2, welding current I is increased at a predetermined gradient by performing current control from time t1 that is an initial stage of occurrence of short circuit. Furthermore, wire feed speed WS is lowered to wire feed speed WS2, which is lower than basic wire feed speed WS1. Immediately before an end of the short-circuit period, that is, immediately before time t2, welding current I is controlled to rapidly decrease upon detection of constriction of a molten welding wire as is conventionally known.

During a period from time t2 to time t3 in an arc period, welding current I is increased at a predetermined gradient by performing current control from time t2 that is an initial stage of occurrence of arc. Note that welding current I is increased until peak current IP of welding current I becomes equal to or higher than 200 A. Furthermore, wire feed speed WS is increased from wire feed speed WS2 to basic wire feed speed WS1.

For example, in a case of CO₂ gas arc welding using CO₂ gas as shielding gas, molten pool is more likely to be dug by being pressed by arc as peak current IP of welding current I becomes higher because of good arc concentration. In the worst case, hole opening (burn-through) of an object to be welded sometimes occurs. Meanwhile, in a case where peak current IP is too low, micro short circuit sometimes occurs. It is therefore necessary to set peak current IP to minimum necessary welding current I so that micro short circuit is hard to occur and the molten pool is not dug. Peak current IP may be maintained for a predetermined period after welding current I becomes peak current IP, and this period may end at time t3.

Immediately after occurrence of arc, wire feed speed WS is in an initial stage of acceleration from wire feed speed WS2 to basic wire feed speed WS1 and is therefore in a low-speed state. It is therefore possible to burn a welding wire and secure an arc length even in a case where peak current IP is not increased more than necessary. This makes it possible to suppress micro short circuit.

During a period from time t3 to time t4 in the arc period, welding current I is output so that basic welding voltage VP can be output by performing constant voltage control. The arc length can be maintained by performing constant voltage control. It is therefore possible to maintain an arc state in which micro short circuit is hard to occur.

During a period from time t4 to time t5 in the arc period, welding current I is lowered toward base current IB equal to or lower than 100 A, at which a large spatter is hard to occur even in a case where micro short circuit occurs, by performing current control. Welding current I is lowered at a predetermined gradient from time t4 to time t5. In this way, a rapid change of the arc state can be mitigated by lowering welding current I to base current IB at a predetermined gradient after a predetermined period from start of arc.

During a period from time t5 to time t6 in the arc period, the state of base current IB is maintained by performing constant current control until time t6 at which next short circuit occurs. Thus maintaining welding current I at base current IB produces effects that a state where short circuit is likely to occur is secured and that a large spatter is hard to occur because of low welding current I even in a case where micro short circuit occurs.

In the conventional arc welding control method, a cycle of the

### Citation List

### Patent Literature

PTL 1: Unexamined Japanese Patent Publication No. 2007-216268

Document WO 2014/073184 discloses arc welding device and control method reflecting the preamble of present claims 1 and 6.

Other art is disclosed by the document WO 2014/156115.

### SUMMARY OF THE INVENTION

### Technical problems

In the conventional arc welding control method described with reference to FIG. 8, during a period from time t2 to time t3 in an arc period, welding current I is increased at a predetermined gradient by performing current control from time t2 that is an initial time of occurrence of arc until peak current IP of welding current I reaches equal to or higher than 200 A. In a conventional welding device, typically, peak currents are stored in association with combinations of wire material and wire diameter of a welding wire and used gas such as shielding gas, and a peak current determined based on a wire material, a wire diameter, used gas, and the like is output.

However, in welding of a zinc-plated steel plate, an appropriate peak current that makes it easy to discharge zinc vapor is needed. A higher peak current makes it easier to discharge zinc vapor. However, zinc vapor is not discharged well in some combinations of peak current and peak current period. This sometimes causes an increase in the number of gas pockets such as pits or blowholes and spatters or causes hole opening (burn-through) of an object to be welded.

In a case where zinc vapor cannot be discharged well, the zinc vapor goes upward in molten pool and is discharged from a surface of the molten pool.

Accordingly, molten metal ejected when the zinc vapor is discharged is scattered to an outside as spatters. Alternatively, the molten metal ejected when the zinc vapor is discharged is short-circuited with a welding wire and is scattered as a spatter by electric energy. This causes a problem that an abnormally large amount of spatter is generated.

### Solution to problems

An arc welding device according to the present invention is defined in claim 1, and is an arc welding device that welds an object to be welded by alternately repeating a short-circuit period in which a welding wire is short-circuited with the object to be welded and an arc period in which the short circuit is released and arc occurs. The arc welding device includes a welding output part, a memory, and a determinator. The memory stores therein one or more combinations of a short circuit frequency of the short circuit, a peak current, and a peak current period. The determinator determines a peak current and a peak current period associated with a short circuit frequency set by a short circuit frequency setter based on the short circuit frequency set by the short circuit frequency setter and the one or more combinations stored in the memory. A welding output part performs welding output based on the peak current and the peak current period determined by the determinator.

In addition, the short circuit frequency may be determined in accordance with a welding speed so that the short circuit occurs at intervals of equal to or less than 0.5 mm on a welding line. More preferably, the short circuit frequency is determined so that the short circuit occurs at intervals of equal to or less than 0.4 mm.

In addition, the peak current may be equal to or higher than 300 A and equal to or lower than 700 A.

In addition, a wire feed speed may be periodically changed in a predetermined cycle and a predetermined amplitude.

According to the present invention, the object to be welded is a surface-treated steel plate.

In addition, the object to be welded may be a zinc-plated steel plate.

An arc welding control method according to the present invention is defined in claim 6, and is an arc welding control method for welding an object to be welded by alternately repeating a short-circuit period in which a welding wire is short-circuited with the object to be welded and an arc period in which the short circuit is released and arc occurs. The arc welding control method includes setting a short circuit frequency of the short circuit; determining a peak current and a peak current period associated with the short circuit frequency set based on one or more combinations of a short circuit frequency, a peak current, and a peak current period; and controlling welding output based on the peak current and the peak current period which are determined.

In addition, the short circuit frequency may be determined in accordance with a welding speed so that the short circuit occurs at intervals of equal to or less than 0.5 mm on a welding line.

In addition, the peak current may be equal to or higher than 300 A and equal to or lower than 700 A.

In addition, a wire feed speed may be periodically changed in a predetermined cycle and a predetermined amplitude.

According to the present invention, the object to be welded is a surface-treated steel plate.

In addition, the object to be welded may be a zinc-plated steel plate.

### Advantageous effects of invention

According to the present invention, welding output is performed based on a peak current and a peak current period appropriate for a short circuit frequency. This makes it possible to suppress hole opening (burn-through) of an object to be welded and occurrence of a gas pocket such as a blowhole and a spatter.

### BRIEF DESCRIPTION OF DRAWINGS

FIG. 1 schematically illustrates a configuration of an arc welding device according to a first exemplary embodiment of the present invention.
FIG. 2 illustrates waveforms of a wire feed speed (sinusoidal waveform), a welding voltage, and a welding current according to the first exemplary embodiment of the present invention.
FIG. 3A illustrates a cross section perpendicular to a welding line of an object to be welded in a short-circuit state according to the first exemplary embodiment of the present invention.
FIG. 3B illustrates a cross section perpendicular to a welding line of an object to be welded at start of peak current period TP immediately after releasing of short circuit according to the first exemplary embodiment of the present invention.
FIG. 3C illustrates a cross section perpendicular to a welding line of an object to be welded at end of peak current period TP according to the first exemplary embodiment of the present invention.
FIG. 4 illustrates ranges of a peak current and a peak current period applied in a case where a short circuit frequency is varied according to the first exemplary embodiment of the present invention.
FIG. 5A illustrates a welding state of a horizontal fillet and a welding current according to the first exemplary embodiment of the present invention.
FIG. 5B illustrates the welding state of the horizontal fillet and the welding current according to the first exemplary embodiment of the present invention.
FIG. 5C illustrates the welding state of the horizontal fillet and the welding current according to the first exemplary embodiment of the present invention.
FIG. 6 illustrates waveforms of a wire feed speed (trapezoidal waveform), a welding voltage, and a welding current according to the first exemplary embodiment of the present invention.
FIG. 7 illustrates waveforms of a wire feed speed (rectangular waveform), a welding voltage, and a welding current according to the first exemplary embodiment of the present invention.
FIG. 8 illustrates temporal changes of welding current I, welding voltage V, wire feed speed WS, motor ON/OFF switching signal N, and motor polarity switching signal K in a conventional arc welding control method.

### DESCRIPTION OF EMBODIMENT

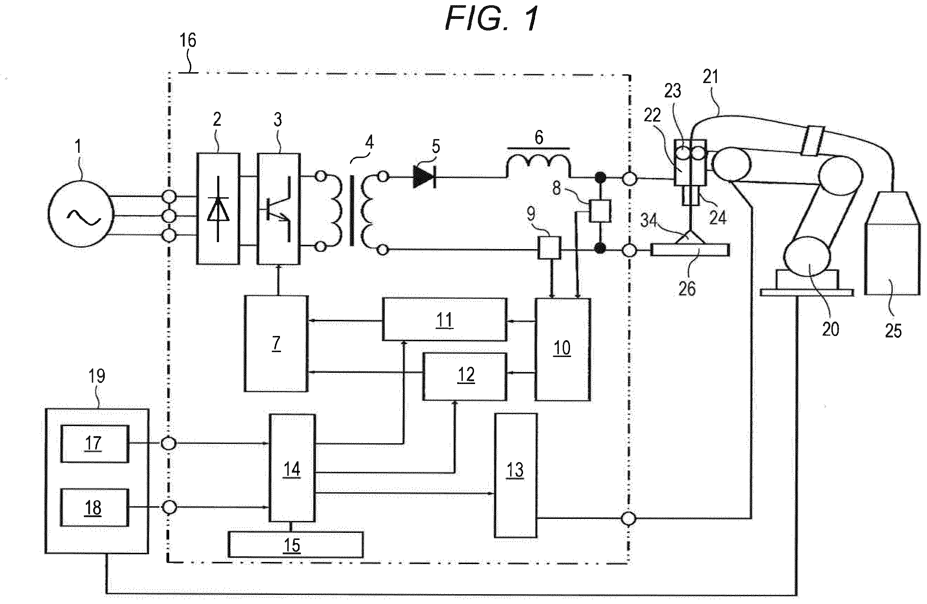

A consumable electrode type arc welding device and an arc welding control method according to an exemplary embodiment of the present invention are described below with reference to FIGS. 1 to 7.

### (First exemplary embodiment)

FIG. 1 schematically illustrates a configuration of an arc welding device according to a first exemplary embodiment. In FIG. 1, welding power-supply device 16 is an arc welding device that welds an object to be welded by alternately repeating short-circuit period TS in which welding wire 21 is short-circuited with object to be welded 26 and arc period TA in which the short circuit is released and arc occurs and includes, as a welding output part, primary rectifier 2, switcher 3, transformer 4, secondary rectifier 5, and reactor 6 (also called DCL). Primary rectifier 2 rectifies output of input power supply 1. Switcher 3 controls welding output by controlling output of primary rectifier 2. Transformer 4 insulates and transforms electric power from switcher 3. Secondary rectifier 5 rectifies a secondary-side output of transformer 4. Reactor 6 is connected in series with secondary rectifier 5. Note, however, that the welding output part is not limited to this circuit configuration and can have a known circuit configuration.

Furthermore, welding power-supply device 16 includes driver 7 that drives switcher 3, welding voltage detector 8 that detects a welding voltage, welding current detector 9 that detects a welding current, short circuit/arc detector 10 that determines whether a welding state is a short-circuit state (short-circuit period) or an arc state (arc period) based on an output of welding voltage detector 8 and/or an output of welding current detector 9, short circuit controller 11 that controls driver 7 during the short-circuit period, and arc controller 12 that controls driver 7 during the arc period.

Furthermore, welding power-supply device 16 includes waveform parameter memory 15 in which a waveform parameter is stored for each welding condition and short circuit frequency, waveform parameter determinator 14 that determines a waveform parameter in accordance with a welding condition and a short circuit frequency, and wire feed speed controller 13 that controls feed of welding wire 21 based on wire feed speed Wf output from waveform parameter determinator 14.

In welding power-supply device 16, short circuit controller 11 controls a short-circuit current so that the short circuit can be released upon receipt of a signal indicative of short circuit from short circuit/arc detector 10. Arc controller 12 outputs a welding waveform parameter during the arc period such as peak current IP upon receipt of a signal indicative of releasing of short circuit and occurrence of arc from short circuit/arc detector 10. Peak current IP is a maximum welding current value during the arc period after releasing of short circuit.

Robot control device 19 that controls operation of robot 20 includes welding condition setter 17 that sets a welding condition and short circuit frequency setter 18 that sets short circuit frequency SFRQ. Robot control device 19 is communicably connected to welding power-supply device 16. The arc welding device may include welding power-supply device 16 and robot control device 19. Alternatively, welding power-supply device 16 may include welding condition setter 17 and/or short circuit frequency SFRQ.

Waveform parameter determinator 14 determines a waveform parameter based on a set welding current that is one of welding conditions set by welding condition setter 17 and short circuit frequency SFRQ set by short circuit frequency setter 18. The waveform parameter determined by waveform parameter determinator 14 is output to short circuit controller 11, arc controller 12, and wire feed speed controller 13. Wire feed speed controller 13 that has received the waveform parameter outputs a control signal concerning wire feed speed Wf to wire feeder 23 provided in robot 20.

For example, an operator sets a set welding current by operating welding condition setter 17 and sets short circuit frequency SFRQ by operating short circuit frequency setter 18. Examples of the waveform parameter include predetermined cycle WF and predetermined amplitude WV of wire feed speed Wf that is periodically changed, peak current IP and base current IB, welding current parameters such as peak current period TP and base current period TB, and wire feed speed Wf. Peak current period TP is a period in which peak current IP is output during an arc period. Waveform parameter memory 15 stores therein one or more combinations of set welding current, short circuit frequency SFRQ, and waveform parameters. Waveform parameters associated with short circuit frequency SFRQ include at least peak current IP and peak current period TP.

Associating short circuit frequency SFRQ and waveform parameters may be, in other words, directly associating short circuit frequency SFRQ and waveform parameters or may be indirectly associating short circuit frequency SFRQ and waveform parameters by directly associating short-circuit cycle TSC that is an inverse of short circuit frequency SFRQ and waveform parameters.

Arc controller 12 receives the waveform parameters including peak current IP from waveform parameter determinator 14 and controls welding output by outputting parameters in the arc period including peak current IP to driver 7. Robot 20 is provided with torch 22 for welding and tip 24 that guides welding wire 21 and supplies a welding current. Wire feeder 23 including a feeding roller controls feed of welding wire 21 based on a control signal concerning wire feed speed Wf supplied from wire feed speed controller 13. Welding wire 21 is supplied from wire storage 25.

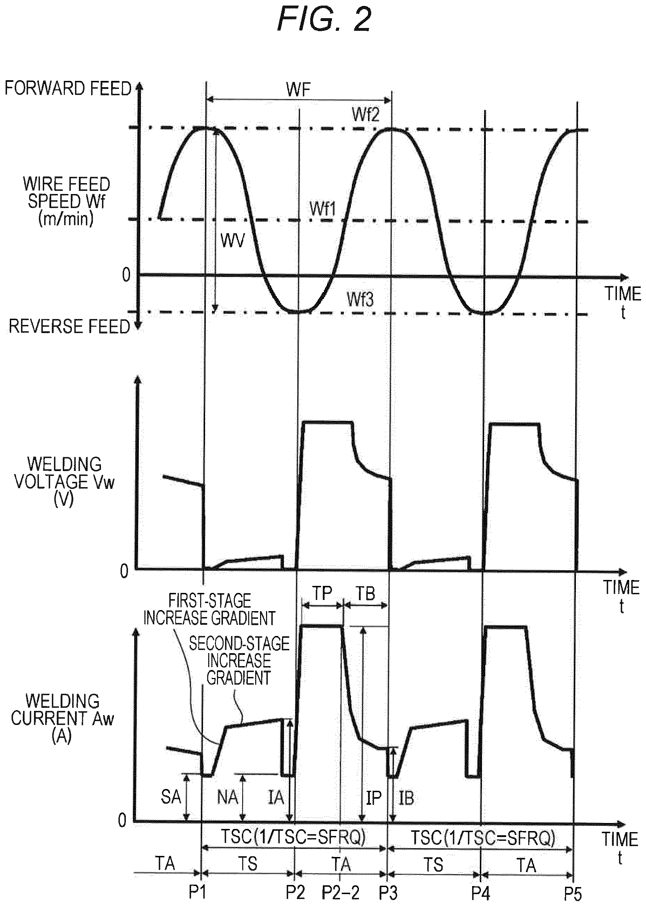

FIG. 2 illustrates waveforms of temporal changes of wire feed speed Wf, welding voltage Vw, and welding current Aw in consumable electrode type arc welding that alternately repeats a short-circuit period (short-circuit state) and an arc period (arc state).

First, wire feed control is described with reference to FIG. 2.

FIG. 2 illustrates an example in which wire feed control of periodically repeating forward feed and reverse feed is performed by using a sinusoidal basic waveform having predetermined cycle WF (predetermined frequency) and predetermined speed amplitude WV based on predetermined constant wire feed speed Wf1. Wire supply speed Wf has peak Wf2 during forward feed and peak Wf3 during reverse feed. At the peak on the forward feed side, short circuit occurs around time PI, and at the peak on the reverse feed side, arc occurs around time P2. Furthermore, next short circuit occurs around time P3 that is a time of a forward feed peak after time P2.

Welding is performed while repeating a control cycle from time P1 to time P3.

In other words, short-circuit period TS that is a short-circuit state and arc period TA that is an arc state are repeated, and predetermined cycle WF corresponds to short-circuit cycle TSC in a case where a cycle from this short-circuit period to a next short-circuit period is regarded as a single cycle. An inverse (1/TSC) of this short-circuit cycle TSC is short circuit frequency SFRQ indicative of a number of times of short circuit per predetermined time.

As described above, occurrence of a short-circuit state and an arc state basically depends on wire feed control of periodically repeating forward feed and reverse feed of a wire feed speed.

Next, welding control is described with reference to FIG. 2.

Time P1 is a time of start of short circuit. For a predetermined period from time PI, short-circuit initial current SA is output, and then the short-circuit current is increased at first-stage increase gradient di/dt and is then increased at second-stage increase gradient di/dt smaller than first-stage increase gradient di/dt.

Then, when constriction of a droplet formed between molten pool formed on object to be welded 26 and a front-end side of welding wire 21 is detected immediately before time P2 close to releasing of short circuit, the welding current is instantaneously decreased to constriction current NA that is lower than current IA at the time of detection of the constriction.

Time P2 is a time at which constriction of the droplet is separated, short circuit is released, a short-circuit state ends, and an arc state occurs. In the arc period starting from time P2, a welding current that is peak current IP is output during peak current period TP immediately after releasing of short circuit (immediately after occurrence of arc), and then the welding current is decreased from peak current IP toward base current IB. Then, once base current IB is reached, base current IB is maintained until next short circuit occurs.

Time P3 is a time at which short circuit next to time P1 occurs, and a state at time P3 is similar to the state at time P1.

The following describes a mechanism for discharging zinc vapor in welding of a zinc-plated steel plate that is a steel plate that has been subjected to surface treatment such as plating.

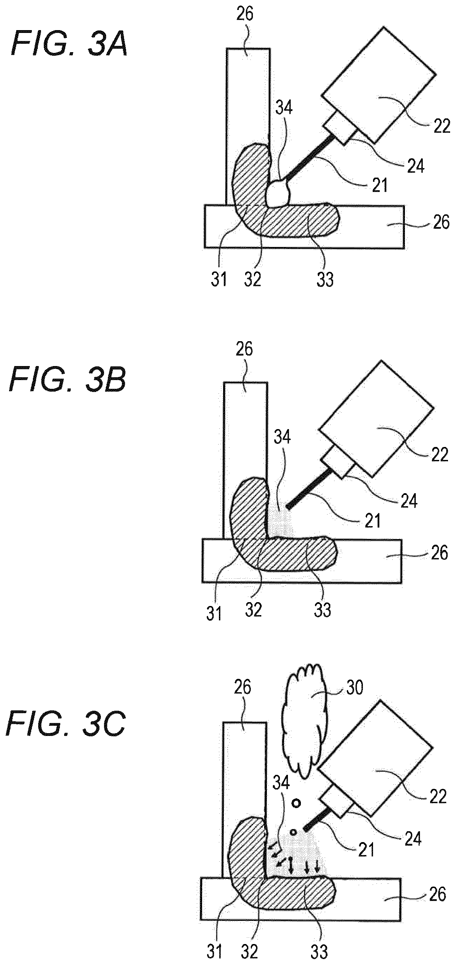

FIGS. 3A to 3C are cross-sectional views illustrating an object to be welded taken along a line perpendicular to a welding line of horizontal fillet welding. FIG. 3A illustrates a short-circuit state (time P1 in FIG. 2), FIG. 3B illustrates a state (time P2 in FIG. 2) at start of peak current period TP immediately after releasing of short circuit, and FIG. 3C illustrates a state (time P2-2 in FIG. 2) at end of peak current period TP.

In the short-circuit state of FIG. 3A, root part 32 serving as the welding line that is a root of welding of object to be welded 26 is covered with molten metal 33. However, arc 34 starts to push molten metal 33 at root part 32 of object to be welded 26 at start of peak current period TP immediately after releasing of short circuit in FIG. 3B, and molten metal 33 in root part 32 of object to be welded 26 has been completely pushed out by arc 34 at end of peak current period TP after releasing of short circuit in FIG. 3C.

In this way, directly below arc 34, molten pool (pool of molten metal 33 into which welding wire 21 and object to be welded 26 have melted during welding) in root part 32 of object to be welded 26 is pushed out by arc force of arc 34, and thus root part 32 is exposed. This makes it easy to discharge zinc vapor 30 to an outside from a vaporizing part of zinc plating where an upper plate and a lower plate that are object to be welded 26 overlap. That is, the molten pool is pushed by arc 34 so that root part 32 of object to be welded 26 is exposed. Zinc vapor 30 generated from object to be welded 26 can escape through the exposed part. This makes it possible to suppress occurrence of a gas pocket such as a blowhole and a spatter.

In order to realize such a mechanism, it is desirable to use gas of high arc concentration like CO₂ arc welding since it is easier to push out molten metal 33 of root part 32 of object to be welded 26. In a case where a position of torch 22 is sweptback, molten metal 33 can be pushed in a direction opposite to a welding progress direction, and therefore the effect of discharging zinc vapor 30 can be increased.

In a case where root part 32 illustrated in FIG. 3C is completely exposed by arc force of arc 34, zinc vapor 30 is easily discharged without occurrence of a spatter and the like. Even in a case where part of molten metal 33 covers root part 32, discharge of zinc vapor 30 is not hindered as long as a thickness of the part is thin, specifically equal to or smaller than approximately 0.5 mm. Specifically, zinc vapor 30 is easily discharged to an outside since root part 32 of object to be welded 26 is easily exposed due to discharge resulting from volume expansion of zinc. That is, molten metal 33 may be pushed by arc force of arc 34 so that molten metal 33 covering root part 32 of object to be welded 26 has a thickness that allows zinc vapor 30 generated from the upper plate and lower plate that are object to be welded 26 to break through molten metal 33 due to volume expansion.

As illustrated in FIGS. 3A to 3C, root part 32 is an end part of a part where the upper plate and lower plate that are object to be welded 26 overlap and is a part having a same length as a length of object to be welded 26 in a welding direction.

As described above, occurrence of a spatter can be markedly suppressed by controlling a welding current, that is, controlling arc force of arc 34 so that zinc vapor 30 is properly discharged regularly.

In order to regularly stabilize such a mechanism, it is desirable to perform wire feed control of repeating forward feed and reverse feed. By repeating forward feed and reverse feed, it is possible to regularly generate a short-circuit state and an arc state and to instantaneously prolong an arc length immediately after releasing of short circuit. By prolonging the arc length, occurrence of micro short circuit can be suppressed, and molten metal 33 can be pushed in a wide range by arc 34.

In a conventional art, in a case where peak current IP is not appropriate, zinc vapor 30 remains in molten metal 33, and as a result, a blowhole (pit) is generated. Furthermore, short circuit with welding wire 21 occurs when zinc vapor 30 bursts out from molten metal 33. This increases occurrence of spatters.

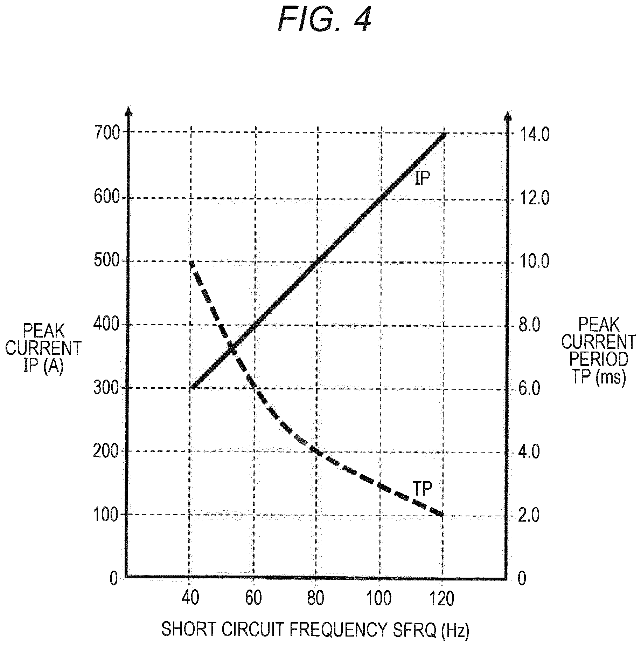

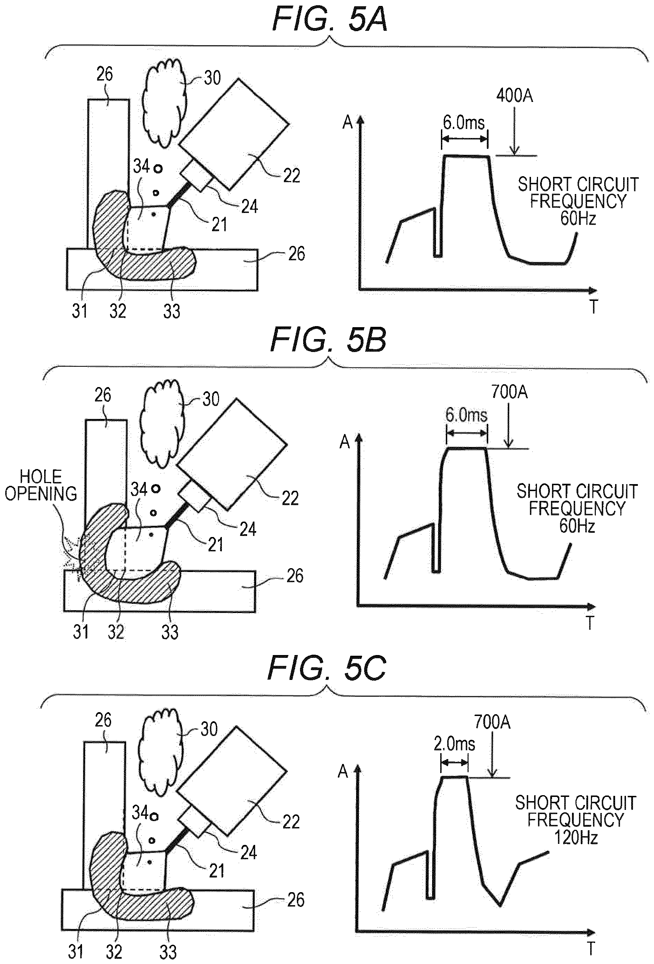

Next, necessity of using appropriate peak current IP and peak current period TP in accordance with short circuit frequency SFRQ that is a number of times of short circuit per predetermined time in welding of a zinc-plated steel plate is described with reference to FIGS. 4, 5A, 5B, and 5C. FIGS. 5A, 5B, and 5C are cross-sectional views taken along a line perpendicular to the welding line. Zinc vapor 30 is not discharged well or a hole is opened in object to be welded 26 in some cases depending on a combination of peak current IP and peak current period TP with short circuit frequency SFRQ. It is difficult to satisfy both of discharge of zinc vapor 30 and suppression of hole opening in object to be welded 26 with respect to short circuit frequency SFRQ.

In view of this, peak current IP and peak current period TP suitable for short circuit frequency SFRQ are needed. It is therefore insufficient to merely set single peak current IP and peak current period TP in accordance with a set welding current that is a setting value of a welding current. That is, it is necessary to determine peak current IP and peak current period TP in consideration of short circuit frequency SFRQ. In other words, it is necessary to determine peak current IP and peak current period TP in accordance with short circuit frequency SFRQ.

FIG. 5A illustrates a state where zinc vapor 30 can be stably discharged in horizontal fillet welding. FIG. 5B illustrates a state where zinc vapor 30 can be stably discharged in horizontal fillet welding, but a hole is opened in object to be welded 26. FIG. 5C illustrates a state where zinc vapor 30 can be stably discharged in horizontal fillet welding.

As illustrated in FIG. 5A, in a case where short circuit frequency SFRQ is low (60 Hz), it is desirable that peak current IP is low (400 A) and peak current period TP is long (6.0 ms). This is because in a case where peak current IP is set to 400 A and peak current period TP is set to 6.0 ms, molten metal 33 in root part 32 of object to be welded 26 is pushed out for a long period by arc force of arc 34 directly below arc 34, and thus root part 32 is exposed. Since root part 32 is exposed, zinc vapor 30 is easily discharged to an outside from zinc plating vaporizing part 31 where the upper plate and lower plate overlap.

For example, in a case where peak current IP is set high (700 A) and peak current period TP is set short (2.0 ms) in the case where short circuit frequency SFRQ is low (60 Hz), arc force is very high, and root part 32 is easily exposed. However, base current period TB in which arc force is weak is long, and therefore a number of times of exposure is small, and an exposure period is short. For this reason, these waveform parameters are not suitable for discharge of zinc vapor 30.

In a case where peak current IP is 700 A and peak current period TP is 6.0 ms as illustrated in FIG. 5B, base current period TB in which the current is lower than peak current IP and arc force is relatively weak can be shortened. However, uranami (penetration bead) occurs since arc force is strong and a period of exposure of root part 32 is long, especially since arc force on an upper plate side is too strong. In the worst case, hole opening (burn-through) of object to be welded 26 occurs. Balance between peak current IP and peak current period TP is important.

In a case where short circuit frequency SFRQ is high (120 Hz) as illustrated in FIG. 5C, short-circuit cycle TSC is short. By setting peak current IP to 700 A and keeping peak current period TP short (2.0 ms), a period of exposure of root part 32 with strong arc force is shortened, base current period TB in which arc force is weak is shortened, and a number of times of exposure of root part 32 is increased. This makes it possible to push out molten metal 33 in root part 32 of object to be welded 26 directly below arc without hole opening especially on the upper plate side and thereby expose root part 32. This makes it easy to discharge zinc vapor 30 to an outside from zinc plating vaporizing part 31 where the upper plate and lower plate of object to be welded 26 overlap. Although a period of exposure of root part 32 is short, short circuit frequency SFRQ is high, and therefore a number of times of exposure of root part 32 can be increased. This increases a total exposure period, thereby prompting discharge of zinc vapor 30.

FIG. 4 illustrates correlation of peak current IP and peak current period TP with short circuit frequency SFRQ. FIG. 4 illustrates an example of parameters in a case where a set welding current is 250 A in CO₂ arc welding using CO₂ as gas.

FIG. 4 shows that in a case where short circuit frequency SFRQ is 60 Hz, an appropriate combination of parameters is peak current IP of 400 A and peak current period TP of 6.0 ms. In a case where short circuit frequency SFRQ is 80 Hz, an appropriate combination of parameters is peak current IP of 500 A and peak current period TP of 4.0 ms, and in a case where short circuit frequency SFRQ is 120 Hz, an appropriate combination of parameters is peak current IP of 700 A and peak current period TP of 2.0 ms.

For example, in a case where short-circuit period TS and arc period TA is 1:1 in a single cycle of short circuit frequency SFRQ, a ratio of peak current period TP to arc period TA is one half to two thirds or more. In other words, making base current period TB in which arc force is weak relatively shorter than peak current period TP in arc period TA is good for zinc plating welding.

As described above, peak current IP and peak current period TP need be set to appropriate values in accordance with short circuit frequency SFRQ. The aforementioned appropriate ranges are values derived in advance by actual experiments, and the like.

Note that short circuit frequency SFRQ is desirably selected in accordance with a welding speed. Since root part 32 is exposed, it is easy to discharge zinc vapor 30 to an outside from a zinc plating vaporizing part where the upper plate and lower plate that are object to be welded 26 overlap. It is therefore desirable to set a short circuit frequency in accordance with a welding speed so that molten metal 33 is pushed by strong arc force at a high frequency, that is, at close intervals on root part 32 that is a welding line.

For example, in a case where a welding speed is 1.2 m/min, short circuit occurs once every 0.25 mm assuming that a short circuit frequency is 80 Hz. In other words, molten metal 33 can be pushed by strong arc force every 0.25 mm. This makes it possible to smoothly discharge zinc vapor 30 and suppress occurrence of a blowhole.

However, in a case where the welding speed is 1.2 m/min but the short circuit frequency is larger than 40 Hz, molten metal 33 is pushed by strong arc force at intervals larger than 0.5 mm that is two times larger than the aforementioned intervals, and therefore zinc vapor 30 is hard to be smoothly discharged. In other words, in a case where molten metal 33 is pushed at rough intervals exceeding 0.5 mm, zinc vapor 30 is not smoothly discharged, and a blowhole is more likely to occur. It is better to select a short circuit frequency so that molten metal 33 is pushed by strong arc force at as close intervals as possible.

In a case where the welding speed is 0.6 m/min, zinc vapor 30 can be smoothly discharged without problems as long as the short circuit frequency is equal to or higher than 40 Hz that allows molten metal 33 to be pushed by strong arc force at close intervals of 0.25 mm.

In a case where the welding speed is 0.96 m/min, zinc vapor 30 can be smoothly discharged without problems as long as the short circuit frequency is equal to or higher than 40 Hz that allows molten metal 33 to be pushed by strong arc force at close intervals of 0.4 mm.

In a case where the welding speed is 1.44 m/min, zinc vapor 30 can be smoothly discharged without problems as long as the short circuit frequency is equal to or higher than 60 Hz that allows molten metal 33 to be pushed by strong arc force at close intervals of 0.4 mm.

As described above, it is more preferable that a short circuit frequency be set in accordance with a welding speed so that short circuit occurs preferably at intervals of equal to or less than 0.5 mm, more preferably at intervals of 0.4 mm or less.

Robot control device 19 (see FIG. 1) may set a welding speed independently of short circuit frequency SFRQ. In this case, the operator determines a welding speed and short circuit frequency SFRQ so that short circuit occurs at intervals of equal to or less than 0.5 mm (preferably at intervals of 0.4 mm or less) on a welding line. Then, the operator inputs the determined welding speed and short circuit frequency to robot control device 19.

Alternatively, welding power-supply device 16 and/or robot control device 19 (hereinafter referred to as "arc welding device or a welding device") may automatically determine a welding speed suitable for short circuit frequency SFRQ set by the operator. A welding speed suitable for short circuit frequency SFRQ is a welding speed that allows short circuit to occur at intervals of equal to or less than 0.5 mm (preferably at intervals of 0.4 mm or less) on a welding line. In this case, the welding device stores therein an appropriate welding speed for each short circuit frequency SFRQ in advance. Then, the welding device determines a welding speed suitable for short circuit frequency SFRQ set by the operator. The welding device may store therein a plurality of proper welding speeds for each short circuit frequency SFRQ in advance. In this case, the welding device presents, to the operator, a plurality of welding speeds suitable for short circuit frequency SFRQ set by the operator as candidates of a welding speed. The welding device determines, as a welding speed, a candidate selected by the operator.

In the arc welding device according to the first exemplary embodiment, waveform parameters including at least appropriate peak current IP and peak current period TP corresponding to each short circuit frequency are stored in waveform parameter memory 15 of welding power-supply device 16 in order to set appropriate peak current IP according to short circuit frequency SFRQ. Waveform parameter determinator 14 determines welding parameters including peak current IP and peak current period TP appropriate for a short circuit frequency based on setting of welding condition setter 17 and setting of short circuit frequency setter 18 in robot control device 19. Basically, welding condition setter 17 for setting a welding condition outputs peak current IP and peak current period TP suitable for standard short circuit frequency SFRQ that is stored in advance. In a case where short circuit frequency SFRQ is changed, short circuit frequency SFRQ is changed, for example, based on a minor adjustment command.

Waveform parameter memory 15 stores therein, according to the present invention, a table including a plurality of combinations of short circuit frequency SFRQ, peak current IP, and peak current period TP. The table is created, for example, based on a correlation diagram as in the one illustrated in FIG. 4. In this table, peak current IP becomes larger as short circuit frequency SFRQ becomes higher. Furthermore, peak current period TP becomes shorter as short circuit frequency SFRQ becomes higher.

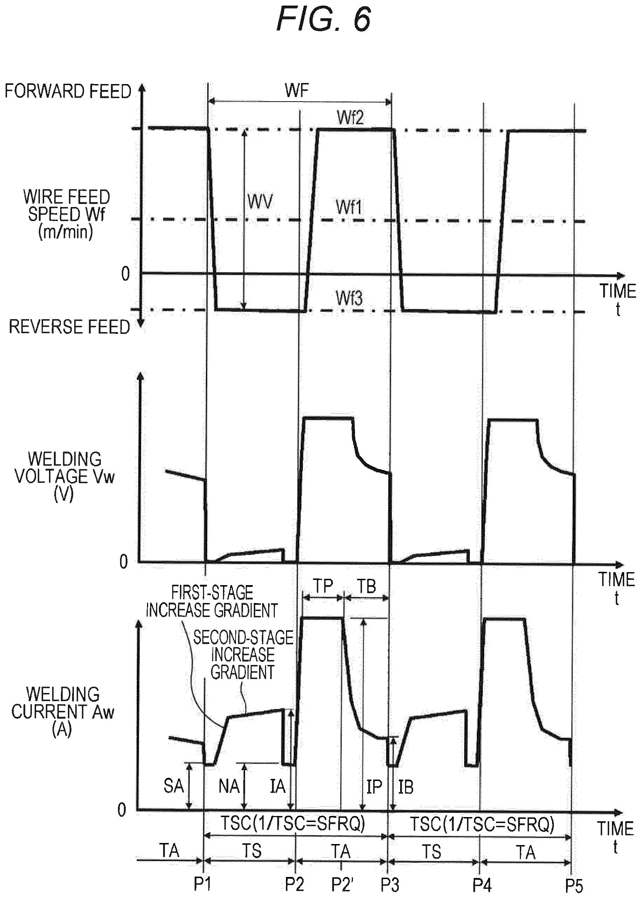

In the above description, an example in which wire feed speed Wf changes in a sinusoidal manner has been described as illustrated in FIG. 2. However, similar effects can also be obtained in a case where wire feed speed Wf changes in a trapezoidal manner as illustrated in FIG. 6.

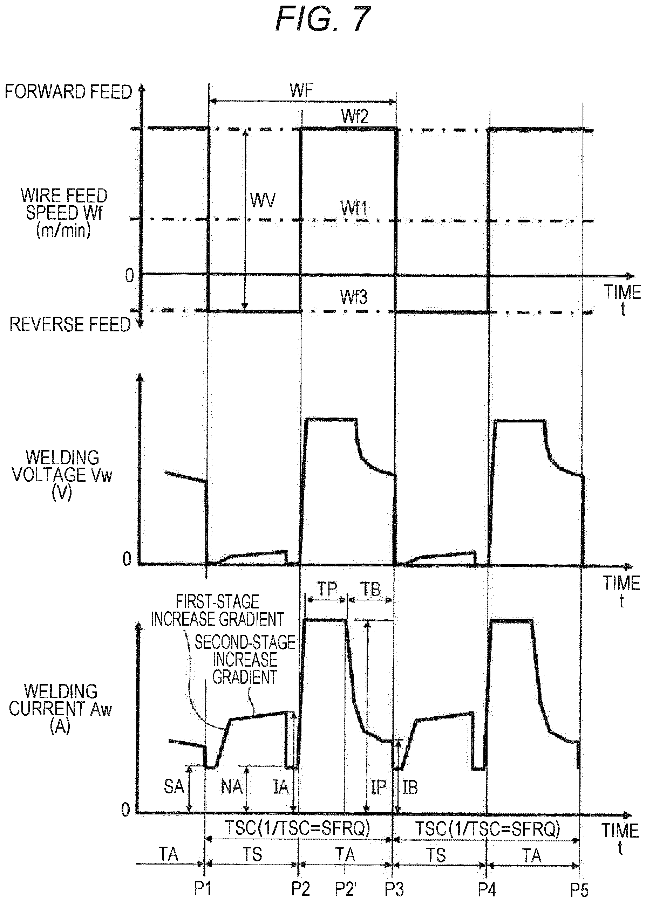

Furthermore, similar effects can also be obtained in a case where feed control is performed in a rectangular manner in accordance with a welding state as illustrated in FIG. 7 instead of periodical feed control illustrated in FIGS. 2 and 6. That is, similar effects can also be obtained in a case where feed control for performing reverse feed upon detection of a short-circuit state as the welding state and performing forward feed upon detection of an arc state as the welding state is employed.

In the above description, an example has been described in which when constriction of a droplet formed on a front-end side of a welding wire formed between molten pool formed on an object to be welded and the welding wire is detected immediately before time P2 close to releasing of short circuit, constriction control for instantaneously shifting a welding current to constriction current NA that is lower than current IA at the time of detection of the constriction is performed. However, even in a case where the constriction control is not performed (not illustrated), the effect of reducing influence of zinc plating on a gas pocket such as a blowhole and a spatter by performing the welding control according to the first exemplary embodiment is large.

### INDUSTRIAL APPLICABILITY

According to the present invention, in a case where a surface-treated object to be welded such as a zinc-plated steel plate is welded by using a welding wire, a peak current and a peak current period associated with a short circuit frequency are employed in an arc period. This makes it possible to prevent hole opening (burn-through) of the object to be welded. In addition, molten pool can be pushed by arc so that a root part of the object to be welded is exposed. This allows gas generated from the object to be welded to escape through the exposed part. It is therefore possible to markedly suppress occurrence of a blowhole and the like and occurrence of a spatter. Therefore, the present invention is industrially useful as an arc welding device and an arc welding control method that weld a surface-treated object to be welded, such as a zinc-plated steel plate, from which gas is generated during welding.

### REFERENCE MARKS IN THE DRAWINGS

- 1:: input power supply
- 2:: primary rectifier
- 3:: switcher
- 4:: transformer
- 5:: secondary rectifier
- 6:: DCL
- 7:: driver
- 8:: welding voltage detector
- 9:: welding current detector
- 10:: short circuit/arc detector
- 11:: short circuit controller
- 12:: arc controller
- 13:: wire feed speed controller
- 14:: waveform parameter determinator (determinator)
- 15:: waveform parameter memory (memory)
- 16:: welding power-supply device
- 17:: welding condition setter
- 18:: short circuit frequency setter
- 19:: robot control device
- 20:: robot
- 21:: welding wire
- 22:: torch
- 23:: wire feeder
- 24:: tip
- 25:: wire storage
- 26:: object to be welded
- 30:: zinc vapor
- 31:: zinc plating vaporizing part
- 32:: root part
- 33:: molten metal
- 34:: arc

## Claims

1. An arc welding device (16) that welds an object to be welded (26) by alternately repeating a short-circuit period in which a welding wire (21) is short-circuited with the object to be welded (26) and an arc period in which the short circuit is released and arc occurs, the object to be welded (26) being a surface-treated steel plate, the arc welding device (16) comprising:
a welding output part (2-6) that performs welding output;
and
a determinator (15) that determines a peak current and a peak current period associated with a short circuit frequency set by a short circuit frequency setter,
**characterized in that** the arc welding device further comprises
a memory (15) storing one or more combinations associating in advance a peak current and a peak current period with a short circuit frequency that is a number of times of the short circuit per predetermined time, with which the gas generated from the workpiece can escape from the exposed portion;
wherein
the determinator (14) determines a peak current and a peak current period associated with a short circuit frequency set by a short circuit frequency setter based on the short circuit frequency set by the short circuit frequency setter and the one or more combinations stored in the memory (26), and
the welding output part (2-6) performs the welding output based on the peak current and the peak current period determined by the determinator ( (14), so that the gas generated from the workpiece can escape from the exposed portion.

2. The arc welding device according to claim 1, wherein
the short circuit frequency is determined in accordance with a welding speed so that short circuit occurs at intervals of equal to or less than 0.5 mm on a welding line.

3. The arc welding device according to claim 1 or 2, wherein
the peak current is equal to or higher than 300 A and equal to or lower than 700 A.

4. The arc welding device according to any one of claims 1 to 3, wherein
a wire feed speed is periodically changed in a predetermined cycle and a predetermined amplitude.

5. The arc welding device according to claim 1, wherein
the object to be welded (26) is a zinc-plated steel plate.

6. An arc welding control method for welding an object to be welded (26) by alternately repeating a short-circuit period in which a welding wire (21) is short-circuited with the object to be welded (26) and an arc period in which the short circuit is released and arc occurs, the object to be welded (26) being a surface-treated steel plate, the arc welding control method comprising:
setting a short circuit frequency that is a number of times of the short circuit per predetermined time;
and being **characterised by** :
determining a peak current and a peak current period associated with the short circuit frequency set based on one or more combinations associating in advance a peak current and a peak current period with a short circuit
frequency, with which the gas generated from the workpiece can escape from the exposed portion; and
controlling welding output based on the peak current and the peak current period which are determined, so that the gas generated from the workpiece can escape from the exposed portion.

7. The arc welding control method according to claim 6, wherein
the short circuit frequency is determined in accordance with a welding speed so that the short circuit occurs at intervals of equal to or less than 0.5 mm on a welding line.

8. The arc welding control method according to claim 6 or 7, wherein
the peak current is equal to or higher than 300 A and equal to or lower than 700 A.

9. The arc welding control method according to any one of claims 6 to 8, wherein
a wire feed speed is periodically changed in a predetermined cycle and a predetermined amplitude.

10. The arc welding control method according to claim 6, wherein
the object to be welded (26) is a zinc-plated steel plate.

## Patentansprüche

1. Lichtbogenschweißvorrichtung (16), die ein zu schweißendes Objekt (26) durch abwechselndes Wiederholen einer Kurzschlussperiode, bei der ein Schweißdraht (21) mit dem zu schweißenden Objekt (26) kurzgeschlossen wird, und einer Lichtbogenperiode, bei der der Kurzschluss freigegeben wird und der Lichtbogen auftritt, schweißt, wobei das zu schweißende Objekt (26) eine oberflächenbehandelte Stahlplatte ist, die Lichtbogenschweißvorrichtung (16) umfassend:
einen Schweißleistungsteil (2 bis 6), der die Schweißleistung erbringt; und
einen Determinator (15), der einen Spitzenstrom und eine Spitzenstromperiode bestimmt, die einer von einem Kurzschlussfrequenzeinsteller geregelten Kurzschlussfrequenz zugeordnet sind,
**dadurch gekennzeichnet, dass** die Lichtbogenschweißvorrichtung ferner Folgendes umfasst:
einen Speicher (15), in dem eine oder mehrere Kombinationen abgelegt sind, in denen ein Spitzenstrom und eine Spitzenstromperiode im Voraus einer Kurzschlussfrequenz zugeordnet sind, die ein Mehrfaches des Kurzschlusses pro vorbestimmter einmaliger Dauer ausmacht, bei der das vom Werkstück erzeugte Gas aus dem freiliegenden Abschnitt entweichen kann;
wobei
der Determinator (14) einen Spitzenstrom und eine Spitzenstromperiode bestimmt, die einer Kurzschlussfrequenz zugeordnet sind, die von einem Kurzschlussfrequenzeinsteller basierend auf der vom Kurzschlussfrequenzeinsteller geregelten Kurzschlussfrequenz und der einen oder den mehreren im Speicher (26) abgelegten Kombinationen gesetzt wird, und
der Schweißleistungsteil (2 bis 6), die Schweißleistung basierend auf dem Spitzenstrom und der durch den Determinator (14) bestimmten Spitzenstromperiode erbringt, so dass das vom Werkstück erzeugte Gas aus dem freiliegenden Abschnitt entweichen kann.

2. Lichtbogenschweißvorrichtung nach Anspruch 1, wobei
die Kurzschlussfrequenz in Übereinstimmung mit einer Schweißgeschwindigkeit so bestimmt wird, dass ein Kurzschluss in Intervallen von gleich oder weniger als 0,5 mm auf einer Schweißlinie auftritt.

3. Lichtbogenschweißvorrichtung nach Anspruch 1 oder 2, wobei
der Spitzenstrom gleich oder höher als 300 A und gleich oder niedriger als 700 A ist.

4. Lichtbogenschweißvorrichtung nach einem der Ansprüche 1 bis 3, wobei
eine Drahtvorschubgeschwindigkeit periodisch in einem vorbestimmten Zyklus und einer vorgegebenen Amplitude geändert wird.

5. Lichtbogenschweißvorrichtung nach Anspruch 1, wobei
das zu schweißende Objekt (26) eine verzinkte Stahlplatte ist.

6. Lichtbogenschweiß-Steuerungsverfahren zum Schweißen eines zu schweißenden Objekts (26) durch abwechselndes Wiederholen einer Kurzschlussperiode, in der ein Schweißdraht (21) mit dem zu schweißenden Objekt (26) kurzgeschlossen wird, und einer Lichtbogenperiode, in der der Kurzschluss ausgelöst wird und ein Lichtbogen auftritt, wobei das zu schweißende Objekt (26) eine oberflächenbehandelte Stahlplatte ist, wobei das Lichtbogenschweiß-Steuerungsverfahren Folgendes umfasst:
das Einstellen einer Kurzschlussfrequenz, die ein Mehrfaches des Kurzschlusses pro vorbestimmter Zeit ausmacht;
und **gekennzeichnet ist durch**:
die Bestimmung eines Spitzenstroms und einer Spitzenstromperiode in Verbindung mit der Kurzschlussfrequenz, die auf einer oder mehreren Kombinationen basiert, die einen Spitzenstrom und eine Spitzenstromperiode im Voraus einer Kurzschlussfrequenz zuordnen, bei der das vom Werkstück erzeugte Gas aus dem freiliegenden Abschnitt entweichen kann; und
Steuerung des Schweißleistungsteils basierend auf dem Spitzenstrom und der Spritzenstromperiode, die bestimmt werden, so dass das vom Werkstück erzeugte Gas aus dem freiliegenden Bereich entweichen kann.

7. Lichtbogenschweiß-Steuerungsverfahren nach Anspruch 6, wobei
die Kurzschlussfrequenz in Übereinstimmung mit einer Schweißgeschwindigkeit so bestimmt wird, dass der Kurzschluss in Intervallen von gleich oder weniger als 0,5 mm auf einer Schweißlinie auftritt.

8. Lichtbogenschweiß-Steuerungsverfahren nach Anspruch 6 oder 7, wobei
der Spitzenstrom gleich oder höher als 300 A und gleich oder niedriger als 700 A ist.

9. Lichtbogenschweiß-Steuerungsverfahren nach einem der Ansprüche 6 bis 8, wobei
eine Drahtvorschubgeschwindigkeit periodisch in einem vorbestimmten Zyklus und einer vorgegebenen Amplitude geändert wird.

10. Lichtbogenschweiß-Steuerungsverfahren nach Anspruch 6, wobei das zu schweißende Objekt (26) ein verzinktes Stahlblech ist.

## Revendications

1. Dispositif de soudage à l'arc (16) qui soude un objet à souder (26) en répétant en alternance une période de court-circuit dans laquelle un fil de soudage (21) est mis en court-circuit avec l'objet à souder (26) et une période d'arc dans laquelle le court-circuit est éliminé et un arc se produit, l'objet à souder (26) étant une tôle en acier à surface traitée, le dispositif de soudage à l'arc (16) comprenant :
une partie de sortie de soudage (2 à 6) qui réalise une sortie de soudage ; et
une unité de détermination (15) qui détermine un courant de crête et une période de courant de crête associés à une fréquence de court-circuit réglée par une unité de réglage de fréquence de court-circuit,
**caractérisé en ce que** le dispositif de soudage à l'arc comprend en outre :
une mémoire (15) stockant une ou plusieurs combinaison(s) associant à l'avance un courant de crête et une période de courant de crête à une fréquence de court-circuit qui est un nombre de fois où a lieu le court-circuit par unité de temps prédéterminée, avec laquelle ou lesquelles le gaz produit à partir de la pièce peut s'échapper de la partie rendue apparente ;
dans lequel
l'unité de détermination (14) détermine un courant de crête et une période de courant de crête associés à une fréquence de court-circuit réglée par une unité de réglage de fréquence de court-circuit, sur la base de la fréquence de court-circuit réglée par l'unité de réglage de fréquence de court-circuit et de la ou des combinaison (s) stockée (s) dans la mémoire (26), et
la partie de sortie de soudage (2 à 6) réalise la sortie de soudage sur la base du courant de crête et de la période de courant de crête déterminés par l'unité de détermination (14), de manière que le gaz produit à partir de la pièce puisse s'échapper de la partie rendue apparente.

2. Dispositif de soudage à l'arc selon la revendication 1, dans lequel :
la fréquence de court-circuit est déterminée en fonction d'une vitesse de soudage de manière que le court-circuit se produise à des intervalles inférieurs ou égaux à 0,5 mm sur une ligne de soudure.

3. Dispositif de soudage à l'arc selon la revendication 1 ou 2, dans lequel :
le courant de crête est supérieur ou égal à 300 A et inférieur ou égal à 700 A.

4. Dispositif de soudage à l'arc selon l'une quelconque des revendications 1 à 3, dans lequel :
une vitesse d'avance du fil est périodiquement modifiée quant à un cycle prédéterminé et à une amplitude prédéterminée.

5. Dispositif de soudage à l'arc selon la revendication 1, dans lequel :
l'objet à souder (26) est une tôle en acier zingué.

6. Procédé de commande de soudage à l'arc permettant de souder un objet à souder (26) en répétant en alternance une période de court-circuit dans laquelle un fil de soudage (21) est mis en court-circuit avec l'objet à souder (26) et une période d'arc dans laquelle le court-circuit est éliminé et un arc se produit, l'objet à souder (26) étant une tôle en acier à surface traitée, le procédé de commande de soudage à l'arc comprenant les étapes suivantes :
régler une fréquence de court-circuit qui est un nombre de fois où a lieu le court-circuit par unité de temps prédéterminée ;
et étant **caractérisé par** les étapes suivantes :
déterminer un courant de crête et une période de courant de crête associés à la fréquence de court-circuit réglée sur la base d'une ou de plusieurs combinaison(s) associant à l'avance un courant de crête et une période de courant de crête à une fréquence de court-circuit, avec laquelle ou lesquelles le gaz produit à partir de la pièce peut s'échapper de la partie rendue apparente ; et
commander la sortie de soudage sur la base du courant de crête et de la période de courant de crête qui sont déterminés, de manière que le gaz produit à partir de la pièce puisse s'échapper de la partie rendue apparente.

7. Procédé de commande de soudage à l'arc selon la revendication 6, dans lequel :
la fréquence de court-circuit est déterminée en fonction d'une vitesse de soudage de manière que le court-circuit se produise à des intervalles inférieurs ou égaux à 0,5 mm sur une ligne de soudure.

8. Procédé de commande de soudage à l'arc selon la revendication 6 ou 7, dans lequel :
le courant de crête est supérieur ou égal à 300 A et inférieur ou égal à 700 A.

9. Procédé de commande de soudage à l'arc selon l'une quelconque des revendications 6 à 8, dans lequel :
une vitesse d'avance du fil est périodiquement modifiée quant à un cycle prédéterminé et à une amplitude prédéterminée.

10. Procédé de commande de soudage à l'arc selon la revendication 6, dans lequel :
l'objet à souder (26) est une tôle en acier zingué.
